Europäisches Patentamt

European Patent Office

Office européen des brevets

(19)

(11) Numéro de publication: **0 185 574**
**B1**

(12) **FASCICULE DE BREVET EUROPEEN**

(45) Date de publication du fascicule du brevet:
**27.09.89**

(51) Int. Cl.⁴: **B 61 B 13/04, B 61 C 13/04,
B 61 C 11/04**

(21) Numéro de dépôt: **85402269.6**

(22) Date de dépôt: **21.11.85**

(54) Installation suspendue de halage ou de transport.

(30) Priorité: **10.12.84 FR 8418836**

(43) Date de publication de la demande:
**25.06.86 Bulletin 86/26**

(45) Mention de la délivrance du brevet:
**27.09.89 Bulletin 89/39**

(84) Etats contractants désignés:
**DE GB**

(56) Documents cités:
**DE-A- 1 755 927**
**FR-A- 1 520 895**
**GB-A- 1 476 188**
**US-A- 2 700 345**

(73) Titulaire: **USINES GERLACH S.A., 207, rue de Bercy,
F-75587 Paris Cedex 12 (FR)**

(72) Inventeur: **Freudl Guerting, Günther, F-57880 Ham
Sous-Vasberg (FR)**

(74) Mandataire: **Ramey, Daniel et al, Cabinet
NETTER 40, rue Vignon, F-75009 Paris (FR)**

ACTORUM AG

## Description

L'invention concerne une installation suspendue de halage ou de transport, utilisable en particulier dans le domaine de la manutention et dans les houillères.

On connaît des installations de halage ou de transport suspendues, dans lesquelles un rail fixe de suspension définit un chemin de roulement pour des galets d'un chariot auquel peut être accrochée une charge à déplacer. Le rail est en général un profilé IPN et le chariot est équipé de galets moteurs à friction qui sont serrés à pression contre l'âme du rail et qui sont entraînés par des moteurs d'un type quelconque (moteurs pneumatiques ou hydrauliques, moteurs électriques, moteurs à combustion interne). Ces installations connues ont un poids et un encombrement relativement importants et sont assez coûteuses. En outre, elles ne peuvent être utilisées lorsque les pentes à gravir sont supérieures à 20°. L'utilisation de galets à friction pour déplacer le chariot le long des rails suspendus interdit aussi l'exploitation de ces installations en environnement humide ou en présence d'eau, en raison de la réduction importante du coefficient de frottement des galets moteurs sur l'âme du rail.

On connaît également des installations de halage sur rails suspendus, dans lesquelles des éléments dentés de crémaillères sont fixés aux rails et coopèrent avec des pignons moteurs du chariot qui viennent en prise sur ces éléments de crémaillères. Toutefois, de telles installations ne peuvent être utilisées en pratique que sur des voies de transport en ligne droite, les changements de direction, dans un plan vertical ou dans un plan horizontal, provoquant un mauvais engrènement et un blocage des pignons moteurs du chariot.

Dans DE-A-1 755 927, les élements dentés de crémaillère sont remplacés par une chaîne à rouleaux. Cette disposition permettrait des changements de direction dans le plan perpendiculaire aux axes des rouleaux, mais non dans le plan parallèle à ceux-ci.

L'invention a pour objet une installation suspendue de halage ou de transport qui ne présente pas les inconvénients précités et qui puisse être utilisée sur des voies de transport à pente importante et/ou incurvées dans un plan horizontal et dans un plan vertical.

L'invention propose à cet effet une installation suspendue de halage ou de transport, comprenant au moins un rail fixe de suspension définissant un chemin de roulement pour des galets d'un chariot auquel peut être accrochée une charge à déplacer et qui est équipé de moyens moteurs propres à le déplacer le long du rail, caractérisé en ce que la partie inférieure du rail est solidaire d'un dispositif de guidage et de retenue d'une chaîne fixe de traction à maillons verticaux et horizontaux alternés, qui forme une crémaillère avec laquelle engrène au moins une roue dentée motrice du chariot, le dispositif de guidage et de retenue comprenant deux plaques fixes longitudinales délimitant avec le rail le logement de la chaîne, les bords en regard de ces plaques étant parallèles et délimitant une fente longitudinale dans laquelle s'engagent les dents de la roue dentée motrice, ladite chaîne étant retenue dans le dispositif de guidage par ses maillons horizontaux ou par ses maillons verticaux.

Une telle installation présente de nombreux avantages: la voie de transport peut avoir une pente relativement importante dans un plan vertical et une courbure accentuée dans un plan vertical ou horizontal. Le montage de la chaîne de traction s'effectue sans difficulté, par coulissement de la chaîne dans le dispositif de guidage et de retenue, puis immobilisation de la chaîne aux deux extrémités de la voie de transport.

Avantageusement, la chaîne de traction est retenue dans son dispositif de guidage par un des côtés de ses maillons horizontaux ou verticaux, ce côté ayant une dimension transversale supérieure à la largeur de la fente et s'appuyant sur les bords des plaques délimitant cette fente. Les autres maillons de la chaîne, qui ne servent pas à retenir celle-ci dans le dispositif de guidage, sont extérieurs au dispositif de guidage. On évite ainsi un encrassement rapide de la chaîne et l'obstruction des espaces entre les maillons dans lesquels s'engagent les dents de la roue dentée motrice du chariot, lors de l'engrènement.

Le chemin de roulement peut comporter un seul rail à section en I, dont les ailes inférieures supportent, d'une part, les galets de roulement du chariot et, d'autre part, les deux plaques délimitant le logement de la chaîne de traction.

En variante, ce chemin de roulement peut comporter deux rails parallèles à section en U ou en L, qui sont disposés dos à dos de façon à présenter deux ailes inférieures formant le chemin de roulement des galets du chariot et qui sont reliés rigidement entre eux.

L'installation selon l'invention peut comprendre une ou deux chaînes de traction parallèles, coopérant par engrènement avec une ou deux roues dentées motrices du chariot.

La roue dentée motrice du chariot peut être disposée dans un plan vertical, sous le chemin de roulement, ou bien être disposée dans un plan perpendiculaire à un plan vertical et passant par l'axe longitudinal du chemin de roulement, lorsqu'on désire réduire l'encombrement en hauteur de l'installation.

De façon générale, l'invention permet de simplifier la construction et de réduire l'encombrement et le poids d'une installation suspendue de halage, et en particulier d'améliorer considérablement le rapport entre l'effort de traction utile et le poids de l'installation. En outre, l'invention permet un halage ou un transport sur une pente relativement accentuée, avec une sécurité beaucoup plus grande. Enfin, grâce à la souplesse de la chaîne de traction, on assure un pas d'engrènement constant pour la roue dentée motrice du chariot, qui peut circuler le long de courbes de rayons relativement faibles.

Dans la description qui suit, faite à titre d'exemple, on se réfère aux dessins annexés, dans lesquels:

— la figure 1 est une vue partielle en plan d'une installation selon l'invention;

— la figure 2 est une vue partielle en coupe transversale de cette installation.

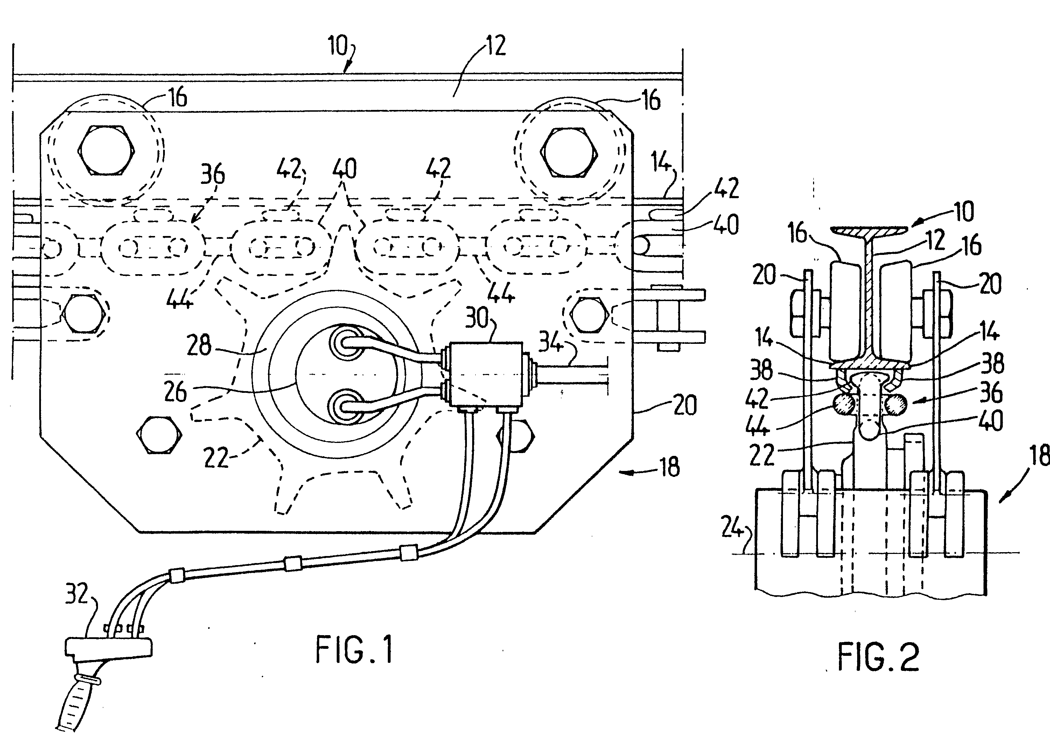

L'installation représentée dans les figures 1 et 2 comprend un rail unique de suspension 10, à section transversale en I, comprenant une âme longitudinale 12 s'étendant dans un plan vertical et deux ailes inférieures 14 sensiblement horizontales.

Ces deux ailes latérales 14 forment les chemins de roulement de galets 16 d'un chariot 18, les galets 16 étant montés libres en rotation autour d'un axe horizontal dans des paliers portés par deux plaques 20 du chariot qui sont parallèles et verticales et qui s'étendent parallèlement à l'âme 12 du rail 10 de part et d'autre de celle-ci. Les plaques 20 du chariot sont reliées rigidement entre elles sous le rail 10 et forment les moyens de support et de logement d'une roue dentée 22 entraînée en rotation autour de son axe horizontal 24 par un moteur pneumatique ou hydraulique 26 et un réducteur 28. Le moteur 26 est alimenté en fluide sous pression par une boîte de distribution 30 associée à une poignée de commande 32 et reliée par des conduits souples 34 à une source de fluide sous pression.

La roue dentée motrice 22 du chariot 18 est en prise avec une chaîne fixe de traction 36 à maillons verticaux et horizontaux alternés qui, dans l'exemple représenté, s'étend en direction sensiblement horizontale sous le rail 10.

Les deux ailes inférieures 14 du rail sont solidaires de deux plaques longitudinales fixes 38 dont les bords longitudinaux en regard, orientés l'un vers l'autre, délimitent entre eux une fente longitudinale dans laquelle s'étendent les maillons verticaux 40 de la chaîne 36. Les côtés supérieurs des maillons verticaux 40 présentent un talon ou élargissement 42, dont la dimension transversale horizontale est supérieure à la largeur de la fente, et qui retiennent la chaîne dans le dispositif de guidage et de retenue formé entre les deux plaques longitudinales 38.

Les maillons horizontaux 44 de la chaîne sont d'un type classique et sont disposés sous les bords des plaques longitudinales 38, donc à l'extérieur du dispositif de guidage et de retenue de la chaîne. Bien entendu, la forme de la roue dentée 22 est adaptée à la forme des maillons de la chaîne 36, les dents de la roue dentée 22 étant destinées à s'engager à l'intérieur des maillons horizontaux 44 de la chaîne, entre les extrémités en regard de deux maillons verticaux successifs 40.

Le montage d'une installation de halage selon l'invention s'effectue sans difficulté. Lorsque les rails 10 pourvus des plaques longitudinales 38 ont été assemblés bout à bout et suspendus en place, une extrémité de la chaîne 36 est introduite dans une extrémité du dispositif de guidage et de retenue, puis est amenée par glissement à l'autre extrémité de ce dispositif. Les deux extrémités de la chaîne sont alors fixées solidement en place, pour interdire tout déplacement ultérieur longitudinal de la chaîne dans son dispositif de guidage et de retenue.

En fonctionnement, la roue dentée 22 du chariot 18, entraînée par le moteur 26 et le réducteur 28, engrène avec les maillons de la chaîne 36 et fait progresser le chariot 18, dans un sens ou dans l'autre, le long du rail 10. Le poids du chariot 18 et de la charge qui peut y être accroché est transmis aux ailes 14 du rail 10 par les galets 16.

Dans les dessins, la roue dentée motrice du chariot a été représentée comme étant située dans un plan vertical. Elle pourrait toutefois être située dans un plan perpendiculaire à un plan vertical et passant par l'axe de la fente longitudinale du dispositif de guidage et de retenue dans la chaîne. Dans ce cas, cette fente s'étendrait dans un plan vertical, et non dans un plan horizontal, et les maillons verticaux de la chaîne comprenant les talons ou élargissements de retenue de la chaîne seraient disposés horizontalement.

Par ailleurs, et si nécessaire, le chariot peut être équipé d'une ou de deux roues dentées motrices engrenant avec une ou deux chaîne de traction parallèles de l'installation.

**Revendications**

1. Installation suspendue de halage ou de transport, comprenant au moins un rail (10) fixe de suspension définissant un chemin de roulement pour des galets (16) d'un chariot (18) auquel peut être accrochée une charge à déplacer et qui est équipé de moyens moteurs (22, 26, 28, 30) propres à le déplacer le long du rail, la partie inférieure du rail (10) étant solidaire d'un dispositif de guidage et de retenue d'une chaîne fixe de traction (36) qui forme une crémaillère avec laquelle engrène au moins une roue dentée motrice (22) du chariot (18), caractérisée en ce que la chaîne est à maillons verticaux (40) et horizontaux (44) alternés, et que le dispositif de guidage et de retenue comprend deux plaques fixes longitudinales (38) délimitant avec le rail (10) le logement de la chaîne, les bords en regard de ces plaques étant parallèles et délimitant une fente longitudinale dans laquelle s'engagent les dents de la roue dentée motrice (22), ladite chaîne étant retenue dans ce dispositif par ses maillons horizontaux ou par ses maillons verticaux.

2. Installation selon la revendication 1, caractérisée en ce que la chaîne (36) est retenue dans le dispositif de guidage par un des côtés de ses maillons horizontaux ou verticaux (40), ce côté ayant une dimension transversale supérieure à la largeur de la fente et s'appuyant sur les bords des plaques (38) délimitant cette fente.

3. Installation selon la revendication 2, caractérisée en ce que les maillons verticaux (40) de la chaîne s'étendent à travers ladite fente et sont retenus dans le dispositif de guidage par un élargissement (42) de leur côté supérieur, tandis que les maillons horizontaux de la chaîne sont disposés sous lesdites plaques longitudinales (38), à l'extérieur du dispositif de guidage.

4. Installation selon la revendication 3, caractérisée en ce que la roue dentée motrice (22) du chariot (18) est à axe de rotation horizontal et s'étend dans un plan vertical passant par l'axe de la chaîne.

5. Installation selon la revendication 2, caractérisée en ce que ladite fente s'étend dans un plan vertical et est traversée par les maillons horizontaux de la chaîne qui sont retenus dans le dispositif de guidage par un élargissement d'un de leurs côtés longitudinaux, tandis que les maillons verticaux sont extérieurs au dispositif de guidage.

6. Installation selon la revendication 5, caractérisée en ce que la rone dentée motrice du chariot s'étend dans un plan passant par l'axe longitudinal de ladite fente et perpendiculaire à un plan vertical.

7. Installation selon l'une des revendications précédentes, caractérisée en ce que le rail (10) comprend des ailes inférieures (14) qui supportent, d'une part, les galets (16) de roulement du chariot et, d'autre part, les deux plaques (38) délimitant le logement de la chaîne de traction (36).

8. Installation selon l'une des revendications précédentes, caractérisée en ce que le chariot comprend deux roues dentées motrices.

9. Installation selon l'une des revendications précédentes, caractérisée en ce qu'elle comprend deux chaînes de traction parallèles, avec lesquelles engrènent deux roues dentées motrices du chariot.

10. Installation selon l'une des revendications précédentes, caractérisée en ce le ou les rails de suspension définissent une voie de roulement du chariot qui comprend des parties incurvées et/ou des parties en pente.

**Patentansprüche**

1. Zug- oder Transporthängebahn mit mindestens einer festen Hängeschiene (10), die einen Rollweg für die Rollen (16) einer Laufkatze (18) definiert, an die eine zu verschiebende Last anzuhängen ist und die mit geeigneten motorischen Einrichtungen (22, 26, 28, 30) zum Verschieben längs der Schiene versehen ist, wobei die Innenseite der Schiene (10) fest mit einer Führungs- und Haltevorrichtung einer festen Zugkette (36) verbunden ist, die eine Zahnstange bildet, in die mindestens ein Antriebszahnrad (22) der Laufkatze (18) eingreift, dadurch gekennzeichnet, daß die Kette aus abwechselnd aufeinanderfolgenden vertikalen (40) und horizontalen (44) Kettengliedern besteht, daß die Führungs- und Haltevorrichtung zwei feste, längsverlaufende Platten (38) aufweist, die zusammen mit der Schiene (10) die Kettenaufnahme bilden, und daß die Kanten dieser Platten parallel liegen und einen Längsspalt begrenzen, in den die Zähne des Antriebszahnrades (22) eingreifen, wobei die Kette in dieser Vorrichtung mittels ihrer horizontalen oder ihrer vertikalen Kettenglieder gehalten wird.

2. Einrichtung nach Anspruch 1, dadurch gekennzeichnet, daß die Kette (36) in der Führungsvorrichtung durch eine Seite ihrer horizontalen oder vertikalen Kettenglieder gehalten ist, wobei diese Seite in Querrichtung eine im Vergleich zur Breite des Längsspaltes grössere Erstreckung hat und an den diesen Längsspalt begrenzenden Kanten der Platten (38) anliegt.

3. Einrichtung nach Anspruch 2, dadurch gekennzeichnet, daß sich die vertikalen Kettenglieder (40) quer in dem Längsspalt erstrecken und in der Führungsvorrichtung durch eine Verbreiterung (42) ihrer oberen Seite gehalten sind, während sich die horizontalen Kettenglieder unterhalb der längsverlaufenden Platten (38) und ausserhalb der Führungsvorrichtung befinden.

4. Einrichtung nach Anspruch 3, dadurch gekennzeichnet, daß das Antriebszahnrad (22) der Laufkatze (18) mit seiner Drehachse horizontal liegt und sich in einer vertikalen, durch die Achse der Kette gehenden Ebene erstreckt.

5. Einrichtung nach Anspruch 2, dadurch gekennzeichnet, daß sich der Spalt in einer vertikalen Ebene erstreckt und von den horizontalen Kettengliedern durchsetzt ist, die in der Führungsvorrichtung durch eine Verbreiterung einer ihrer Längsseiten gehalten sind, während sich die vertikalen Kettenglieder ausserhalb der Führungsvorrichtung befinden.

6. Einrichtung nach Anspruch 5, dadurch gekennzeichnet, daß sich das Antriebszahnrad in einer durch die Längsachse des Spaltes gehenden und zur vertikalen Ebene rechtwinkligen Ebene erstreckt.

7. Einrichtung nach einem der vorhergehenden Ansprüche, dadurch gekennzeichnet, daß die Schiene (10) innere Schenkel (14) aufweist, welche einerseits die Laufrollen (16) der Laufkatze abstützen und andererseits die beiden Platten (38) tragen, welche die Aufnahme der Zugkette (36) begrenzen.

8. Einrichtung nach einem der vorhergehenden Ansprüche, dadurch gekennzeichnet, daß die Laufkatze zwei Antriebszahnräder aufweist.

9. Einrichtung nach einem der vorhergehenden Ansprüche, dadurch gekennzeichnet, daß sie zwei parallele Zugketten aufweist, in die zwei Antriebszahnräder der Laufkatze eingreifen.

10. Einrichtung nach einem der vorhergehenden Ansprüche, dadurch gekennzeichnet, daß die Hängeschiene oder die Hängeschienen einen Laufweg der Laufkatze definieren, der Abschnitte mit bogenförmiger Krümmung und/oder mit Gefälle aufweist.

**Claims**

1. A suspended haulage or conveying installation comprising at least one fixed suspension rail (10) defining a runway for rollers (16) of a carriage (18) onto which a load to be displaced can be hooked and which is equipped with driving means (22, 26, 28, 30) adapted to displace it along the rail, the lower portion of the rail (10) being rigidly connected to a device for guiding and retaining a fixed pull chain (36) which forms a rack with which at least one toothed driving wheel (22) of the carriage (18) meshes, characterised in that the chain has alternate vertical (40) and horizontal (44) links, and that the guiding and retaining device comprises two fixed longitudinal plates (38) delimiting, with the rail (10), the housing of the chain, the sides of these plates facing one another being parallel and delimiting a longitudinal slot in which the teeth of the driving toothed wheel (22) engage, said chain being retained in this device by its horizontal links or by its vertical links.

2. An installation according to Claim 1, characterised in that the chain (36) is retained in the guiding device by one of the sides of its horizontal or vertical links (40), this side having a transverse dimension greater than the width of the slot and bearing against the sides of the plates (38) delimiting this slot.

3. An installation according to Claim 2, characterised in that the vertical links (40) of the chain extend through said slot and are retained in the guiding device by a widened portion (42) of their upper side, while the horizontal links of the chain are disposed below said longitudinal plates (38), outside the guiding device.

4. An installation according to Claim 3, character-

ised in that the driving toothed wheel (22) of the carriage (18) has a horizontal axis of rotation and extends in a vertical plane passing through the axis of the chain.

5. An installation according to Claim 2, characterised in that said slot extends in a vertical plane and is traversed by the horizontal links of the chain which are held in the guiding device by a widened portion of one of their longitudinal sides, while the vertical links are outside the guiding device.

6. An installation according to Claim 5, characterised in that the driving toothed wheel of the carriage extends in a plane passing through the longitudinal axis of said slot and perpendicular to a vertical plane.

7. An installation according to any one of the preceding Claims, characterised in that the rail (10) comprises lower flanges (14) which support, on the one hand, the runners (16) of the carriage and, on the other hand, the two plates (38) delimiting the housing of the pull chain (36).

8. An installation according to any one of the preceding Claims, characterised in that the carriage comprises two driving toothed wheels.

9. An installation according to any one of the preceding Claims, characterised in that it comprises two parallel pull chains with which two driving toothed wheels of the carriage mesh.

10. An installation according to any one of the preceding Claims, characterised in that the suspension rail or rails define a track for the carriage, which track comprises curved portions and/or inclined portions.

FIG.1

FIG.2

EP 0 185 574 B1